# EUROPÄISCHE PATENTSCHRIFT

(11) **EP 0 573 912 B1**
(45) Veröffentlichungstag und Bekanntmachung des Hinweises auf die Patenterteilung: **10.04.1996**
(21) Anmeldenummer: 93109018.7
(22) Anmeldetag: 04.06.1993
(51) Int. Cl.: B29C 45/76

(54) **Verfahren zur Steuerung einer Spritzgiessmaschine**
Method for controlling an injection moulding machine
Méthode de commande d'une presse d'injection

(30) Priorität: 12.06.1992 DE 4219259
(43) Veröffentlichungstag der Anmeldung: 15.12.1993
(73) Patentinhaber: Hehl, Karl, D-72290 Lossburg (DE)
(72) Erfinder: Hehl, Karl, D-72290 Lossburg (DE)
(74) Vertreter: Reinhardt, Harry

(56) Entgegenhaltungen:
- EP-A- 0 257 099
- DE-A- 4 025 221
- PATENT ABSTRACTS OF JAPAN vol. 16, no. 212 (M-1250)19. Mai 1992 & JP-A-04 037 519 (MEIKI CO LTD) 7. Februar 1992
- PATENT ABSTRACTS OF JAPAN vol. 11, no. 186 (P-586)16. Juni 1987 & JP-A-62 014 208 (MATSUSHITA ELECTRIC IND CO LTD) 22. Januar 1987
- PATENT ABSTRACTS OF JAPAN vol. 14, no. 237 (M-976)(4180) 21. Mai 1990 & JP-A-02 063 712 (FANUC LTD) 5. März 1990
- PATENT ABSTRACTS OF JAPAN vol. 14, no. 311 (M-0994)4. Juli 1990 & JP-A-02 103 114 (NISSEI PLASTICS IND CO) 16. April 1990

## Beschreibung

Die Erfindung betrifft ein Verfahren zur Steuerung einer Spritzgießmaschine nach dem Oberbegriff des Anspruches 1 oder 2.

Bisher erfolgte die Steuerung und das Einrichten einer Kunststoff-Spritzgießmaschine dadurch, daß der Bediener vor Beginn des ersten Spritzzyklus an einer Eingabeinheit, die jeweiligen Betriebsparameter in eine Datenverarbeitungseinheit eingibt. Die Datenverarbeitungseinheit liefert ihm zu diesem Zweck auf einem Datensichtgerät sämtliche in der Maschine verfügbaren Eingabemasken, die nacheinander aufgerufen werden, ohne daß die Möglichkeit einer spezifischen Auswahl besteht. Mit großem Zeitaufwand müssen die jeweils erforderlichen Masken parametrisiert werden, was die Fehlerhäufigkeit infolge von Fehleingaben erhöht. Bei dieser Eingabe kann nicht überprüft werden, ob sämtliche Ablaufschritte eines Spritzzyklus in sinnvoller Weise aufeinander folgen und, selbst wenn erwünscht, können bestimmte Schritte nicht mehrmals wiederholt werden, wie z.B. ein mehrmaliges Öffnen oder Schließen der Formschließeinheit. Darüberhinaus kann nur der jeweilige Spritzzyklus eingegeben werden ohne Berücksichtigung der Anlauf- und Endphasen des Produktionsablaufes. Daher ist bei dem gattungsgemäßen Verfahren die Übersichtlichkeit so gering, daß die Maschinen nur von ausgebildetem Fachpersonal eingerichtet werden können.

Bei einer derartigen, dem Oberbegriff der Ansprüche 1 und 2 zugrundeliegenden Spritzgießmaschine nach der JP-A-04-037 519 besteht die Möglichkeit, Teile eines Spritzzyklus zu konfigurieren, wenngleich weder die Peripherie der Spritzgießmaschine berücksichtigt wird, noch bereits vor der Eingabe Abläufe für den Benutzer nachvollziehbar dargestellt werden. Es erfolgt hier kein Vorschlag seitens der Steuerung für weitere Eingaben. Bei dieser Maschine wird vielmehr unter einer maximalen Anzahl von zehn Umschaltstufen für die Einspritzgeschwindigkeit und Umschaltstufen für den Einspritzdruck eine geringere Anzahl ausgewählt und nach dieser erfolgten Auswahl werden die einzelnen Umschaltstufen wie vorher abgespeichert eingespielt, damit der Bediener sie mit den gewünschten Werten versehen kann. Ergänzend ist es zwar möglich, einzelne Relationen in Form von Diagrammen darzustellen, eine übergeordnete Struktur, die jedoch die Eingabe des Benutzers überwacht, ist nicht vorgesehen.

Aus der EP-A 0 257 099 ist es ferner bekannt, an einer Spritzgießmaschine für die Arbeitsparameter bestimmte Sollwerte zu setzen und diese mit einem Fehlerüberwachungssystem zu kontrollieren. Hierzu werden beim Einrichten der Spritzgießmaschine vom Bediener Werte eingegeben, die in einer Speichereinheit gespeichert werden. Ferner sind Beurteilungsmittel vorgesehen, die die Eingaben dahingehend überprüfen, ob sie bestimmten Anforderungen genügen. Ist dieses Kriterium erfüllt, werden die Eingaben gespeichert und Alarmmittel werden betätigt, sobald die Beurteilungsmittel entscheiden, daß die Anforderungen nicht erfüllt sind. Eine Konfiguration eines Spritzzyklus oder gar eines Produktionsablaufes ist hiermit nicht möglich. Ebensowenig kann die Steuerung dem Bediener Vorschläge für weitere Eingaben unterbreiten, die zu einer zuverlässigen und schnellen Eingabe der Betriebsparameter führen.

Aus der JP-A-62-014 208 ist es bekannt, den Eingabevorgang hinsichtlich der Bedingungen, die von einem Produkt gewährleistet werden müssen, dadurch zu vereinfachen, daß aus einem Speicher für grafische Daten einzelne Bedingungen ausgewählt werden, die von dem Endprodukt erfüllt werden müssen. Auf der Basis der vom Benutzer eingegebenen Auswahl erfolgt dann aus einem weiteren Speichermedium eine Auswahl für geeignete Werte der Arbeitsparameter. Aufgrund der damit vorgegebenen Bereiche können dann die Arbeitsparameter z.B. für einen Spritzzyklus bestimmt werden. Dies vereinfacht zwar die Parametereingabe, jedoch ist nicht beabsichtigt, einen Spritzzyklus oder einen Produktionsablauf unter vereinfachter Darstellung für den Benutzer zu konfigurieren.

Aus der JP-A-02-63712 ist es bekannt, Fehlerbedingungen abzuspeichern und diese in Verbindung mit Eingaben zu bringen. Erfolgt eine Eingabe, so überprüft die Steuerung, ob diese Eingabe in einem zulässigen Bereich liegt. Ist die Eingabe zulässig, wird sie gespeichert, ist sie nicht zulässig, erfolgt eine Fehlermeldung unter Angabe des Grundes, warum die Eingabe unzulässig ist. Dadurch läßt sich zwar die Eingabe von Spritzgießparametern vereinfachen, da dem Benutzer vor Augen geführt wird, warum seine Eingabe unzulässig ist, jedoch besteht auch hier nicht die Möglichkeit, aufgrund dieser Eingabe, die ohnehin nur auf die Parameter gerichtet ist, einen Spritzzyklus vor Eingabe der Parameter zu konfigurieren.

Aus der DE-A 40 25 221 ist ein Verfahren zur Nachführung einer Spritzgießmaschine, ausgehend von empirisch oder systematisch ermittelten Werten bekannt. Dabei wird ein Optimierungsprogramm verwendet, in das das Grundwissen über die Regeln des Kunststoff-Spritzgießens und ein Kennlinienfeld aus Betriebsparametern eingegeben ist. Dieses Verfahren ist darauf gerichtet, durch Nachführen der Maschine einen Spritzling im Lauf mehrerer Spritzzyklen zu optimieren, also zur Qualitätskontrolle bestimmt. Daher werden auch nur Parameter eingegeben, die konkret den Spritzling beeinflussen können, aber beispielsweise nicht Werte die den Spritzzyklus allein beeinflussen wie bspw. Formöffnungs- oder Ausstoßzeiten. Das Vorhandensein von Peripheriegeräten wie der Materialzuführung ist unbeachtlich. Der Bediener selbst kann nur die CAD-mäßige Füllsimulation beeinflussen. Dieses Verfahren setzt daher erst bei der Teileoptimierung an und kann nicht bereits beim Einrichten der Spritzgießmaschine zur Qualitätssteigerung beitragen.

Ausgehend von diesem Stand der Technik liegt der Erfindung die Aufgabe zugrunde, ein Verfahren der eingangs genannten Gattung derart weiterzubilden, daß die zum Einrichten der Spritzgießmaschine notwendigen Parameter schneller abgearbeitet werden können, wobei gleichzeitig die Fehlerhäufigkeit verringert wird.

Diese Aufgabe wird durch die im Anspruch 1 oder 2 genannten Merkmale gelöst.

Die Ausführung des Werkzeuges zusammen mit den Grundregeln des Spritzgießens bestimmt nach diesem Verfahren die Anzahl der Einstellparameter und nicht die in Steuerung und Maschinenausrüstung installierte Mannigfaltigkeit. Ein effizientes und zugleich fehlerfreies Einrichten von Werkzeugen wird möglich. Die Grundregeln beziehen sich dabei auf Regeln, die ein Wissen derjenigen wiedergeben, die im Spritzgießbereich Erfahrungen haben über die Regeln des Spritzgießens an sich. Dieses Wissen ist fest in einem Arbeitsprogramm gespeichert, d.h., das Programm kann nicht zusätzliches Wissen lernen, obwohl das gespeicherte Wissen selbstverständlich vom Hersteller der Spritzgießmaschine durch Änderungen des Programms soweit erforderlich ergänzt werden kann. Diese Grundregeln erlauben das Einrichten einer logischen Sequenz von Schritten. Daher schreiben diese Regeln z.B. fest, welcher Schritt überhaupt möglich ist, wenn ein erster Schritt vorgegeben ist, oder welcher Schritt zwischen zwei bestehende Schritte eines Ablaufs eingefügt werden kann. Eine derartige Regel regelt daher die verschiedenen Möglichkeiten einer Sequenz innerhalb eines Spritzzyklus.

Zur Erklärung, warum die Vielfalt der Komponenten nicht die Anzahl der Eingabeparameter bestimmt, sei folgendes Beispiel angeführt. Nimmt man an, die Maschine besitzt verschiedene Peripherieeinrichtungen, wie zum Beispiel Zylinderheizungen, externe Heizungen oder Handling-Einheiten usw., so sind diese grundsätzlich nicht für jeden Spritzzyklus erforderlich. Wenn die Spritzlinge empfindliche Teile wie Linsen sind, wird zum Beispiel ein Handling benötigt, andernfalls nicht. Wenn aber das Handling benötigt wird, muß das Handling programmiert werden, muß das Handling programmiert werden, daß es die Spritzteile an der richtigen Stelle übernimmt und in Ablageflächen geordnet ablegt. In diesem Beispiel wird dann aber auch keine Auswerfereinheit benötigt, und daher können die diesbezüglichen Eingaben entfallen.

Die Spritzgießmaschine bietet dem Bediener nur konkret mögliche und sinnvolle Auswahlmöglichkeiten im Rahmen der zur Verfügung stehenden Eingabemöglichkeiten an. Dadurch werden die grundsätzlichen Voraussetzungen für eine frei konfigurierbare Abfolge von Teilabläufen eines Spritzzyklus geschaffen, was die Übersichtlichkeit bei der gesamten Konfiguration eines Spritzzyklus wesentlich erhöht. Die im Hintergrund arbeitende Datenverarbeitungseinheit schafft somit eine dynamisch unterlagerte Baumstruktur, die den Bediener gezielt auf seine Möglichkeiten und die dabei auftretenden Risiken hinweist. Beispielsweise ist es nicht möglich bei ausgefahrenem Auswerfer die Form schließen zu lassen. In das Verfahren hat ein Wissen Eingang gefunden, das den Aufbau eines gesamten Produktionsablaufes erlaubt, der für die spätere Funktion der Maschine abgespeichert wird und zur Steuerung nachfolgender Herstellungsschritte dient.

Bei einer Ausbildung nach den Ansprüchen 4-6 wird der Spritzzyklus auf einem Datensichtgerät frei konfiguriert. Dabei werden zur Erleichterung grafische sprachunabhängige Symbole verwendet, die dem Bediener einen schnellen Überblick über den gesamten Spritzzyklus ermöglichen, zumal wenn der gesamte Zyklus auf einer einzigen Maske, also unmittelbar am Bildschirm darstellbar ist. Die sprachunabhängigen Symbole helfen dem Kunden gleichgültig wo die Maschine eingesetzt wird, daß jeder Bediener selbst in Entwicklungsländern nach kurzer Einweisung die Maschine bedienen kann, ohne daß umfangreiche vielsprachige Dokumentationen über die Steuerung anzufertigen sind. Dabei hilft die Maschine selbständig mit, die Konfiguration des Spritzzyklus zu beschleunigen, indem sie wie bereits erwähnt nur die sinnvollen Möglichkeiten vorschlägt.

Bei einer Ausbildung nach Anspruch 8 ist eine Plausibilitätsprüfung eingebaut, die z.B. das Schließen der Formschließeinheit vom Einfahren des Auswerfers abhängig macht, so daß innerhalb des Spritzzyklus bei der Eingabe stets sowohl parallel als auch vor- oder nachgeschaltete Teile des Ablaufes berücksichtigt werden. Nach Anspruch 9 wird geprüft, ob der jeweilige Spritzzyklus überhaupt abgeschlossen ist. Erst wenn der eingegebene Spritzzyklus aus Sicht des Rechners abgeschlossen ist, werden die für diesen Spritzzyklus erforderlichen Masken im Datensichtgerät dargestellt, so daß die erforderlichen Betriebsparameter eingegeben werden können.

Bei einer Ausbildung nach den Ansprüchen 11 und 12 können auch zeitgleich ablaufende Vorgänge übersichtlich dargestellt und innerhalb der jeweiligen zeitlichen Folgen geeignete Schritte frei unter den selektierten Schritten ausgewählt werden.

Weitere Vorteile ergeben sich aus den Unteransprüchen. Im folgenden wird die Erfindung anhand eines Ausführungsbeispieles näher erläutert.

Es zeigen:
- Fig. 1: Ein Hierarchiebild der gesamten Steuerung,
- Fig. 2,3: die Darstellung eines Bildschirmausschnittes, auf dem die Konfigurationsmaske dargestellt ist,
- Fig. 4: eine Darstellung der Eingabeeinheit,
- Fig. 5: ein den schematischen Aufbau von Kontrolleinheit und Maschine darstellendes Blockdiagramm,
- Fig. 6: eine Baumstruktur für mögliche Schritte in der Konfigurierung von Figur 2,
- Fig. 7-10: Abbildungen des Bildschirms beim Aufbau eines Spritzzyklus,
- Fig. 11: ein Flußdiagramm für das erfindungsgemäße Verfahren.

Bei einer Spritzgießmaschine müssen für die Steuerung bzw. Einrichtung von Spritzzyklen Betriebsparameter eingegeben werden. Diese Eingabe erfolgt über eine Eingabeeinheit E, wobei die eingegebenen Betriebsparameter in einer Datenverarbeitungseinheit gespeichert werden. Gemaß diesen Betriebsparametern werden die einzelnen Spritzzyklen durchgeführt. Die Datenverarbeitungseinheit ist entweder durch Eingaben des Bedieners oder über Sensoren oder Rückmeldeeinrichtungen darüber informiert, welche Maschinenausrüstung seitens des Werkzeuges, seitens der Spritzgießmaschine oder hinsichtlich der Peripheriegeräte vorhanden ist. Als Peripheriegeräte kommen z.B. Handling, Temperiergeräte, Sortiereinrichtungen oder Stapeleinrichtungen in Betracht, also an der Maschine vorhandene oder ihr zugeordnete Einrichtungen.

Die Eingabe erfolgt in einer den Bediener führenden Form, wobei der Bediener über die Eingabeeinheit E für den Ablauf von den Konfigurationen des Spritzzyklus nur die Parameter eingeben kann, die in Kenntnis des physikalisch, maschinenseitig und werkzeugseitig, konstruktiv bedingt möglichen Verfahrensablaufes von Spritzzyklus oder Produktionsablauf sinnvoll sind und sich kompatibel in bereits bestehende Teile des Spritzzyklus eingliedern lassen. Die Steuerung stellt also dem Bediener eine selektive Auswahl an Eingabemöglichkeiten zur Verfügung. Zur Eingabe besitzt die Eingabeeinheit E Softkeys S, Symboltasten 12a, die zugleich als normale alphanumerische Tastatur 12 dienen, einen Cursorblock 10 mit Cursortasten 10a sowie einen Ziffernblock 11, so daß auch in den der Konfigurationsmaske untergeordneten Eingabemasken die Parameter einzugeben sind.

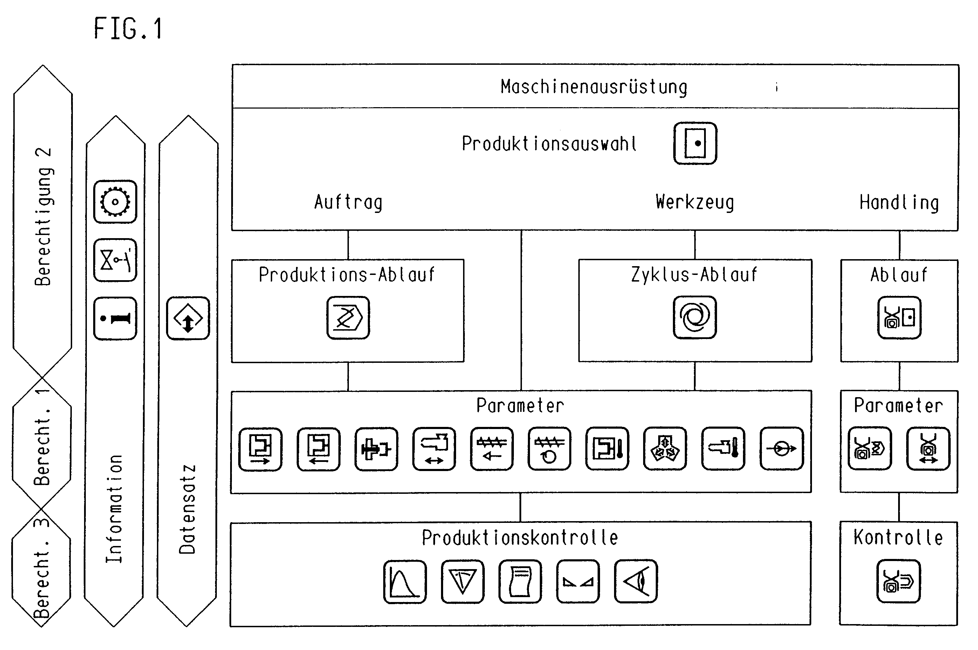

Aus Figur 1 ist der grundsätzliche hierarchische Aufbau der Steuerung erkennbar. Die gesamte Steuerung ist in drei Berechtigungsstufen aufgeteilt, die den Zugang hinsichtlich der Eingabe nur zu bestimmten Zeitpunkten innerhalb der Produktion oder teilweise nur geschultem Fachpersonal ermöglichen. In der Berechtigungsstufe 1 ist z.B. nur die Parametereingabe möglich, während in Berechtigungsstufe 2 die Eingaben vorgegeben werden können, die die Maschinenausrüstung betreffen, den Zyklusablauf, den Produktionsablauf oder die Verarbeitung an Peripheriegeräten. Die Berechtigungsstufe 3 dient der Qualitätskontrolle des Produktes durch entsprechende Einspielungen auf dem Datensichtgerät oder Ausgaben auf einer Druckereinheit. Die Berechtigungsstufen in Figur 1 zeigen die unterschiedliche Berechtigung, die ein Benutzer haben muß, um Daten oder Eingaben in bestimmten Bereichen vorzunehmen. Eine Person, die Zugang zur Berechtigungsstufe 1 zur Eingabe von Parametern besitzt, hat keinen Zugang zu den Berechtigungsstufen 2 und 3. Umgekehrt hat jedoch eine Person, die Zugang zu den Berechtigungsstufen 2 oder 3 hat, ebenfalls Zugang zu den Berechtigungsstufen 1 bzw. 1 und 2. Daher zeigen die angedeuteten Berechtigungsstufen jeweils den Blockbereich, in dem ein Zugang vorhanden ist. Die in Fig. 1 dargestellte Aufteilung in die Berechtigungsstufen ist nur beispielhaft und kann hinsichtlich ihrer Übergänge beliebig verschoben werden. In sämtlichen Stufen können Informationen über den laufenden Spritzzyklus oder hinsichtlich der Ergebnisse abgerufen werden und vollständige Datensätze über ein Dateneingabegerät der Datenverarbeitungseinheit ausgegeben werden.

Die Berechtigungsstufen sind frei verschiebbar, d.h. eine Person, die Zugang zu einer höheren Berechtigungsstufe hat, kann die Grenzlinien verschieben, um Personen mit der Berechtigungsstufe 1, zum Beispiel die Eingabe von Daten für den Produktionsablauf zu ermöglichen. In der vorliegenden Figur 1 sind die Grenzlinien zwischen den einzelnen Berechtigungsstufen horizontal durch die Schnittpunkte der einzelnen Berechtigungsstufen gezogene Linien. Die Berechtigungsstufe bezieht sich insofern auf eine Art Schutzstufe, um eine sichere Arbeitsweise zu garantieren. Grundsätzlich wird dadurch erreicht, daß ungeschultes Personal keine Daten eingeben kann, die einen großen Einfluß besitzen oder möglicherweise zu Schaden führen. Mit anderen Worten führt eine Veränderung der Berechtigungsstufe dazu, daß Personen, die bisher Daten nur in einer niedrigeren Berechtigungsstufe eingeben konnten, nun einen Zugang zu anderen Eingabemöglichkeiten haben oder umgekehrt.

Die Spalten in Figur 1 betreffend Ausgabe von Information und Alarmprogramm verdeutlichen, daß in allen Berechtigungsstufen Informationen zum Beispiel über Dateneingaben, Qualitätskontrolle oder Produktion ausgedruckt werden können oder auf einem Monitor anzeigbar sind. Das Alarmprogramm unterstützt den Benutzer und beschützt Benutzer und Maschine. So informiert das Alarmprogramm beispielsweise den Benutzer, wenn er versucht, die Maschine bei geöffneter Schutzvorrichtung zu starten, darüber, daß er zunächst die Schutzabdeckung schließen muß, bevor er die Maschine startet.

Insofern ist eine freie Konfiguration eines Spritzzyklusses auf dem Datensichtgerät möglich, die über eine symbolgeführte Auswahl einzelner Schritte eines Spritzzyklusses erfolgt, wobei sich eine hierarchische Ablauffolge ergibt, die bereits anhand der Symbolik für Benutzer verschiedenster Sprachen verständlich ist, wodurch sich aufwendige, vielsprachige Dokumentationen zur Steuerung weitgehend vermeiden lassen.

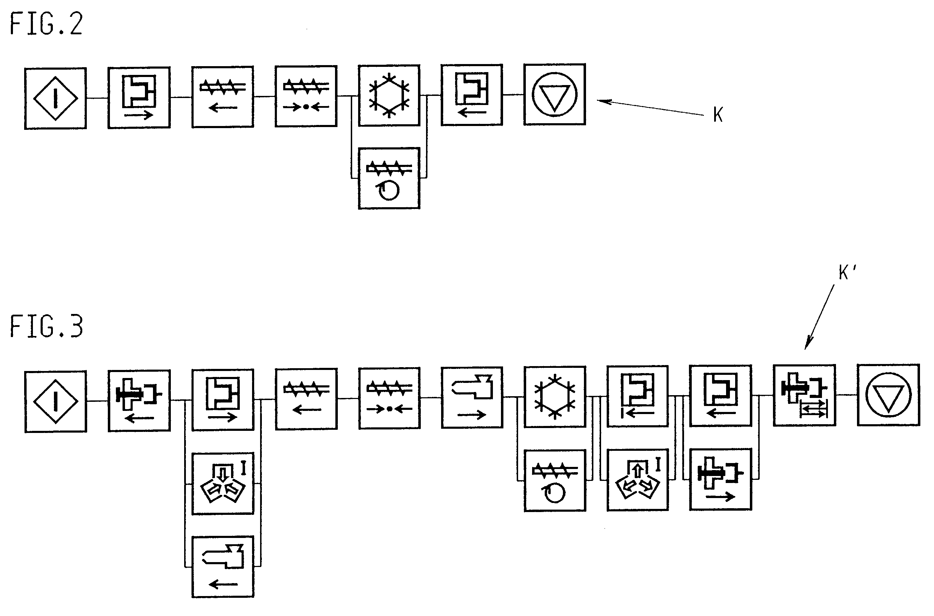

Die Konfiguration findet in Berechtigungsstufe 2 unter dem Stichwort "Zyklus-Ablauf" statt. Auf dem Bildschirm wird eine Darstellung gemäß den Figuren 2 und 3 gezeigt. In Figur 2 ist diesbezüglich ein grundsätzlicher Ablauf dargestellt. Das erste und letzte Zeichen dieser Darstellung kennzeichnen Beginn und Ende des Spritzzyklus. Die weitern Symbole stehen von links nach rechts für den Vorgang des Werkzeugschließens, den Vorgang des Einspritzens, die Nachdruckphase, das Kühlen der Spritzform, wobei gleichzeitig als paralleler Schritt dazu das Dosieren der einzuspritzenden Menge möglich ist, und schließlich wird das Werkzeug wieder geöffnet. Beginnt der Bediener mit dem ersten Zeichen, wird ihm von der Steuerung eine Auswahl von gerade an dieser Stelle sinnvollen Zeichen zur Verfügung gestellt, die als nächster Schritt erfolgen können. Auf jeden Fall fordert ihn die Steuerung auf, wenn er das Werkzeug einmal geschlossen hat, daß er es im Rahmen des Zyklusses auch wieder öffnet. Insofern findet eine Plausibilitätsprüfung auf Zyklizität statt.

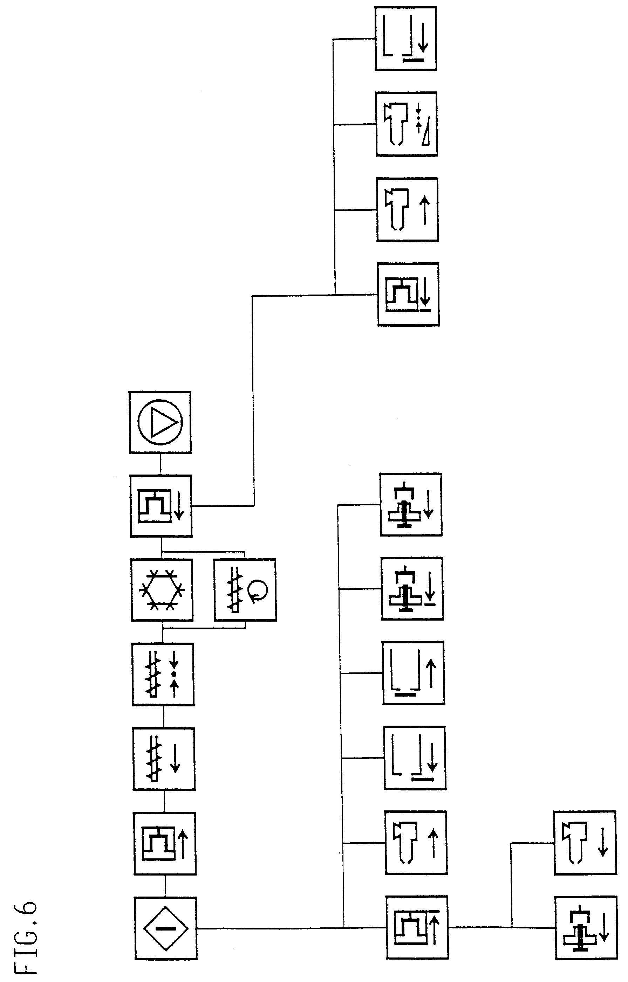

Die Baumstruktur kann beispielsweise eine binäre Struktur sein. Figur 6 zeigt Auswahlmöglichkeiten in der Baumstruktur. In der ersten Linie von Figur 6 ist ein Spritzzyklus abgebildet, wie er in Figur 2 dargestellt ist. Nach unten und unterhalb des Startfeldes ist ein Baum angedeutet, der die Möglichkeiten für einen ersten Zyklusschritt darstellt, d.h. Formschließen, Zurückziehen der Spritzgießeinheit usw. Unterhalb der ersten Möglichkeit, d.h. unterhalb "Formschließen" sind zwei Untermöglichkeiten dargestellt, nämlich Auswerfer zurückziehen und Spritzgießeinheit vorwärts bewegen. Nachdem der Benutzer die erste Möglichkeit ausgewählt hat, sind ihm weitere Schritte (Untermöglichkeiten) zugänglich.

Damit sind jedoch die Möglichkeiten dieser Steuerung noch nicht erschöpft. Einzelne Schritte könne auch mehrfach wiederholt oder in Teilabschnitten durchgeführt werden. Z.B. wird in Figur 3 in Spalte 8 und 9 das Werkzeug zunächst nur teilweise und dann erst vollständig geöffnet. Je nach den Bedürfnissen des Bedieners kann eingegeben werden, daß das Werkzeug nur bis auf einen Spalt schließt und erst nach dem Einspritzen vor der Nachdruckphase vollständig schließt. Beliebige, sinnvoll gleichzeitig ausführbare Teile eines Spritzzyklusses können parallel zueinander konfiguriert werden, wie dies z.B. in der dritten Spalte von Figur 3 dargestellt ist. Dort wird gleichzeitig das Werkzeug geschlossen, ein Werkzeugteil eingefahren, nämlich der Kernzug I, wobei von der Steuerung erkannt wird, wieviel Kernzüge zur Verfügung stehen, und auch die Plastifiziereinheit wird während dieses Schrittes nach vorne gefahren. Beim Konfigurieren des Zyklus-Ablaufes können dabei die Elemente der Eingabeeinheit eine weitere Auswahlmöglichkeit eröffnen.

Die Steuerung prüft auch die Plausibilität aufeinanderfolgender Schritte und/oder rückblickend auf bereits eingegebene Schritte dahingehend, ob es z.B. sinnvoll ist, das Werkzeug zu schließen, während der Auswerfer noch in den Formhohlraum eingefahren ist. Will der Bediener derartige Schritte eingeben, verhindert die Steuerung in Kenntnis der Grundregeln des Spritzgießens eine entsprechende Eingabe. Mit anderen Worten verhindert die Kontrolleinheit unnötige Eingaben und überprüft die Vertretbarkeit der Eingaben. Beispielsweise ist insofern auch das Verbot eines Schließens des Formwerkzeugs bei ausgefahrenem Auswerfer ein Beispiel für eine Grundregel des Spritzgießens. Die Kontrolleinheit verhindert aber auch die Eingabe von Parametern, die nicht möglich sind, weil z.B. das Formöffnungsmaß nur 200 mm beträgt, während der Benutzer 350 mm eingegeben hat.

Daher kann der Benutzer zunächst einen Spritzzyklus konfigurieren, wobei das System nur alternativ mögliche Schritte für die Konfiguration vorschlägt. Sobald die Konfiguration beendet ist, kann der Benutzer diejenigen Eingabeparameter, die für die Produktion des Spritzteils erforderlich sind, wie z.B. Temperatur, Bewegung, Druck, zu verarbeitende Menge an plastischem Material usw. eingeben. An dieser Stelle kontrolliert und überwacht das System die Dateneingabe des Benutzers. Die ganze Zeit überprüft das System, ob die eingegebenen Werte vertretbare Möglichkeiten oder vollständig unsinnige Eingaben sind. Sofern die Werte unsinnig sind, erlaubt das Programm nicht die Eingabe dieser Werte und schlägt alternative Werte vor oder gibt zumindest weitergehende Eingabeinformationen. Die sogenannte Plausibilitätsprüfung im Rahmen dieser Erfindung betrifft beispielsweise die Überprüfung, ob tatsächlich der nächste Schritt einer Schrittfolge eine vertretbare Möglichkeit ist, um einen Spritzzyklus zu erstellen. Die Plausibilitätsprüfung überprüft aber auch, ob ein Zyklus komplett ist. Am Ende einer Konfiguration eines Spritzzyklus auf einer ersten Eingabemaske überprüft das System, ob der Spritzzyklus mit den vorliegenden Eingaben überhaupt beendet werden kann. Das System überprüft aber auch die Eingabeparameter daraufhin, ob sie, wie z.B. die Bewegung des beweglichen Formträgers, den Abschluß eines Spritzzyklus ermöglichen. In diesem Fall müssen alle Bewegungen des beweglichen Formträgers zumindest einmal auch zum Schließen der Spritzgießform während des Einspritzens des Kunststoffmaterials führen. Daher entspricht auch diese Überprüfung beispielsweise einer der Grundregeln.

Betrachtet man den Spritzablauf von Figur 3, wird zunächst der Auswerfer herausgefahren, dann wird gleichzeitig das Werkzeug geschlossen, der Kernzug eingefahren und die Plastifiziereinheit vorgefahren. Dann erfolgt das Einspritzen und die Nachdruckphase und die Plastifiziereinheit fährt zurück. Während des Abkühlens des Spritzteils erfolgt zugleich eine Dosierung für das nächste Spritzteil und während das Werkzeug zunächst teilweise und dann vollständig aufgefahren wird, wird der Kernzug eingefahren und bei offenem Werkzeug sodann der Auswerfer betätigt. Schließlich wird am Ende des Spritzzyklus noch ein mehrstufiges Ausstoßen von Spritzteilen ausgeführt.

Zusammengefaßt erfolgt das Einrichten der Spritzgießmaschine durch eine Überwachungsstruktur mit übergeordneter Baumstruktur zur Überwachung der Betriebsparameter. Diese Überwachungsstruktur stellt dem Anwender nur die sinnvollen Eingaben zur Verfügung und erwartet von ihm auch die Eingabe von zum Abschluß des jeweiligen Spritzzyklus noch notwendigen weiteren Eingaben. Dabei sind auch beliebige Peripheriegeräte hinsichtlich ihrer Ablaufsteuerung direkt eingebunden.

Sobald der Spritzzyklus konfiguriert ist, wird dem Bediener gezielt zu jedem der im Spritzzyklus angeführten Symbole die jeweils erforderliche Eingabemaske zur Verfügung gestellt, so daß er nur noch in diesen Eingabemasken seine Eingaben in Berechtigungsstufe 1 vornehmen kann und insofern die Fehlerhäufigkeit verringert wird. Stellt der Bediener während der Spritzzyklen fest, daß die eingegebenen Parameter nicht zu einem optimalen Ergebnis führen, ermöglicht ihm die Steuerung einen Direktzugriff auf die zu verändernde Eingabemaske. Dazu kann er mit den Cursortasten 10a das entsprechende Symbol ansteuern und einen Softkey S betätigen und es öffnet sich ihm die gewünschte Eingabemaske. Es ist also nicht mehr erforderlich, sämtliche vorher abgespeicherten Masken durchzuspielen, bis die richtige Maske vorliegt.

Die Steuerung kann auch die konfigurierten Spritzzyklen in einen gesamten Produktionsablauf einbetten. Bevor die Maschine einen Spritzzyklus durchführen kann, muß sie dazu erst befähigt werden, indem zum Beispiel eine Temperierung des Werkzeuges erfolgt oder die Öltemperatur auf eine vorbestimmte Temperatur gebracht wird. Ähnlich verhält es sich am Ende eines Auftrages. Bevor die Maschine für einen neuen Auftrag vorbereitet werden kann, muß bspw. ein Leerspritzen und Reinigen der Plastifiziereinheit oder eine Rückführung der Temperatur erfolgen. Nun können dazu die Randbedingungen im Rahmen der in Berechtigungsstufe 2 angegebenen Konfigurierung des Produktionsablaufes zusammengestellt werden. Dies erfolgt so, wie bereits eingangs hinsichtlich des Zyklus-Ablaufs beschrieben wurde. Zunächst wird auf einer Konfigurationsmaske der gesamte Produktionsablauf gebildet und dann können die Parameter soweit erforderlich eingegeben werden. Diese Randbedingungen bestimmen nun sogenannte 'Ablaufsphasen' und 'Verlaufsphasen'. Bei den Ablaufsphasen handelt es sich um die Abschnitte eines Produktionsablaufes, die zu Beginn und zu Ende eines Produktionsvorgangs oder eines Spritzzyklus vorzunehmen sind, um die Spritzgießmaschine überhaupt an den Spritzzyklus heranzuführen oder nach dem Spritzzyklus wieder stillzulegen. Verlaufsphasen hingegen treten insbesondere heutzutage immer öfter dadurch auf, daß nur noch kleine Chargen gespritzt werden. Beim Übergang z.B. von einem Spritzwerkzeug auf das andere Spritzwerkzeug sind hier entsprechende Verlaufsphasen vorzusehen, die z.B. eine Umstellung des plastifizierten Materials beinhalten können.

Die Steuerung dient nicht nur zur Einrichtung der Maschine, sondern auch zur Kontrolle. Nach dem ersten Spritzzyklus wird anhand der auftretenden und erfaßten Betriebsparameter eine Nachführung zur Optimierung der Spritzergebnisse infolge eines Vergleichs der eingegebenen mit den ermittelten Betriebsparametern durchgeführt. Das Ergebnis dieser Qualitätskontrolle kann in der Berechtigungsstufe 3 abgefragt werden und eine Änderung ist möglich oder kann selbständig von der Steuerung vorgenommen werden.

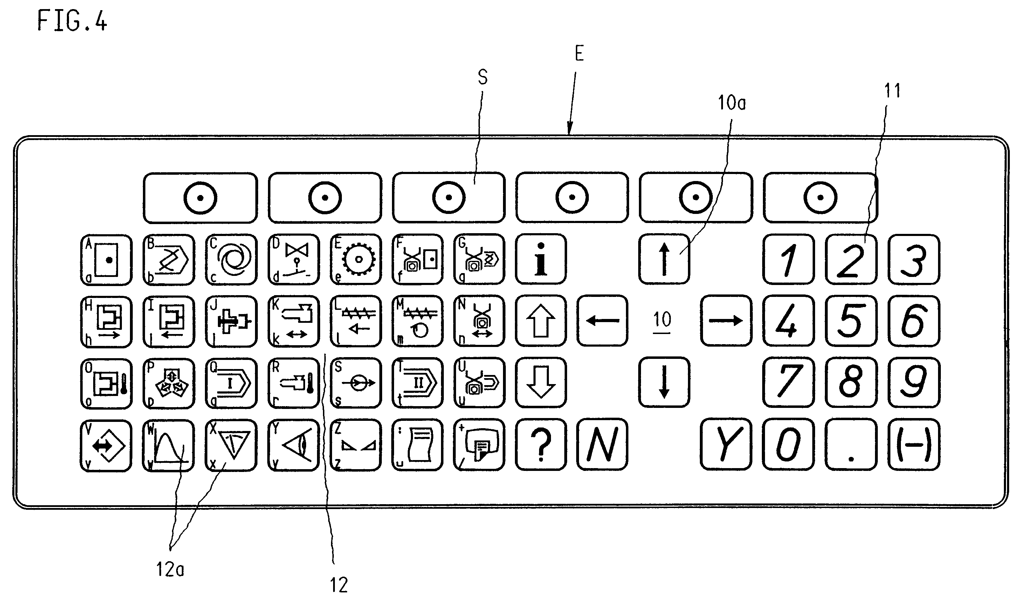

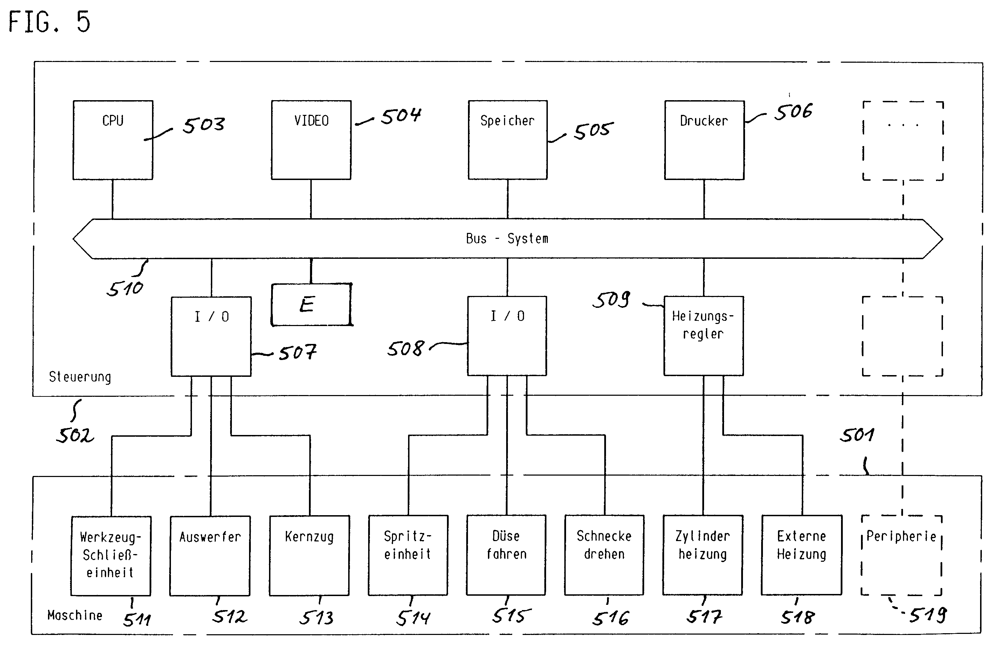

Figur 5 zeigt eine Spritzgießmaschine 501 mit Kontrolleinheit 502. Die Kontrolleinheit umfaßt eine CPU Datenverarbeitungseinheit 503, eine Videovorrichtung 504 sowie einen Speicher 505 für Parameter und das gespeicherte Wissen über die Grundregeln des Spritzgießens. Diese Wissensbasis umfaßt z.B. die physikalisch möglichen und strukturell spezifischen Produktionsabläufe und Parameter, die mit der jeweiligen Spritzgießmaschine, dem Werkzeug und den gegebenenfalls vorhandenen Peripheriegeräten in Einklang stehen, wie eingangs erläutert. Wahlweise kann ein Drucker 506 angeschlossen werden und eine Eingabeeinrichtung E (Fig. 4). Die Kontrolleinheit 502 arbeitet mit der Spritzgießmaschine 501 über die I/O-Einheiten 507,508 und den Heizungsregler 509 zusammen. Die I/O-Einheiten senden beispielsweise Kontrollsignale, um die Maschineneinrichtungen zu betätigen und geben Signale von Sensoren zur Überwachung des Verfahrensablaufes weiter. Die Bestandteile 503 bis 509 sowie jede Kontrolleinheit werden vorzugsweise über einen Systembus 510 miteinander verbunden.

Die Spritzgießmaschine umfaßt eine Werkzeugschließeinheit 511, einen Auswerfer 512, einen Kernzug 513, eine Spritzeinheit 514, eine Antriebseinheit zum Düse fahren 515, Einheiten zum Drehen der Schnecke 516, eine Zylinderheizung 517, eine externe Heizung 518 und gegebenenfalls Peripheriegeräte 519. Die Kontrolleinheit 502 registriert dabei, ob ein Peripheriegerät an der Maschine angeschlossen ist oder nicht und, falls ja, ermöglicht dem Benutzer die Eingabe spezifischer Informationen zum Gebrauch der Peripherievorrichtung soweit erforderlich.

Figur 11 zeigt ein Flußdiagramm für die Arbeitsweise des Programms. Grundsätzlich werden mit dem Programm zunächst ein Produktionsablauf festgelegt und sodann die Arbeitsparameter eingegeben. Das in Figur 11 beispielhaft dargestellte Verfahren beginnt mit der interaktiven Konfigurierung 601 eines Produktionsablaufs. Dieser umfaßt die Schritte eines Einspielens eines Menüs für die mögliche Auswahl von Produktionssequenzen, das dem Benutzer im Schritt 602 zur Auswahl gestellt wird. In Schritt 603 empfängt die Kontrolleinheit vom Benutzer Eingaben und speichert die Auswahl. Mit ihrem Wissen sucht die Kontrolleinheit in Schritt 604 nach weiteren Auswahlmöglichkeiten, die sich in die bereits bestehenden früheren Benutzerauswahl einfügen läßt und spielt diese im Datensichtgerät ein: Nach jeder Eingabe wird gefragt, ob der Spritzzyklus gemäß Schritt 605 vollständig ist, wobei die Schritte 602 bis 605 so lange wiederholt werden, bis die Antwort ja lautet. Im zweiten Block werden unter der Überschrift des Schrittes 606 interaktiv die Arbeitsparameter für den Produktionsablauf eingegeben. Gemäß der Vorauswahl werden in Schritt 607 die Eingabemasken für die Eingabe der erforderlichen Parameter eingespielt. Gemäß der Eingabe des Benutzers in Schritt 608 werden die Parameter dann gespeichert und nach der Eingabe erfolgt in Schritt 609 die Abfrage, ob die Arbeitsparametereingabe vollständig ist. Wenn nein, werden die Schritte 607 bis 609 wiederholt, bis die Antwort ja lautet. Sodann erfolgt, falls erforderlich, ein interaktives Optimieren der gespeicherten Werte unter Schritt 610. In Schritt 611 wird der Kontrolleinheit die gewünschte Änderung übermittelt, worauf die Kontrolleinheit gemäß der Auswahl im Schritt 612 die zugehörige Eingabemaske einspielt. Die modifizierte Eingabe wird in Schritt 613 empfangen und gespeichert und sodann fragt die Kontrolleinheit ab, ob die Optimierung beendet ist und falls nein, werden die Schritte 611 bis 614 so lange wiederholt, bis die Antwort ja lautet. In diesem Falle ist mit Schritt 615 die Eingabe beendet.

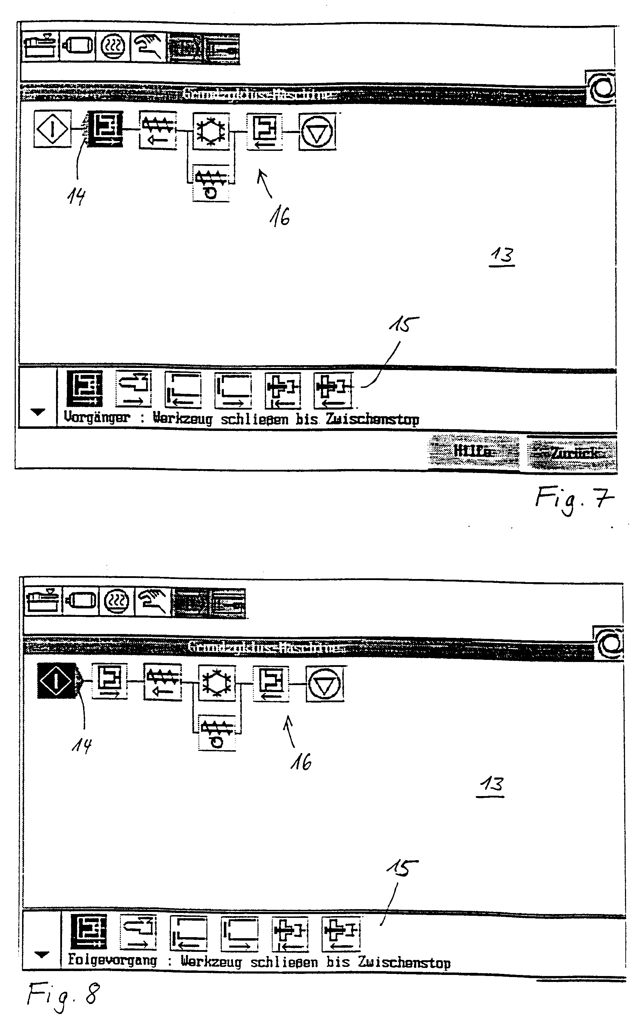

Die Figuren 7 bis 10 zeigen verschiedene Darstellungen des Bildschirms beim Aufbau eines Produktionsablaufs. Vergleicht man den dargestellten Zyklus 16 in Figur 7 mit dem in Figur 2 dargestellten, so sind beide Zyklen nahezu identisch, wenngleich der dritte Schritt von Figur 2 in Figur 7 weggelassen ist. Der Benutzer kann unter Einsatz des Cursors einen der Zyklusschritte auswählen. In der Zeile 15 am unteren Rand des Schirms ist eine Palette von ergänzenden Zyklusschritten dargestellt. Der Schritt des Zyklus, an dem sich der Cursor befindet, ist schwarz unterlegt. Der entsprechende Schritt in der Palette 15 ist ebenfalls schwarz unterlegt.

An diesem Punkt kann der Benutzer nun den Cursorpfeil 14 nach links, rechts oder nach unten, gegebenenfalls sogar nach oben richten, um nach weiteren Möglichkeiten zu suchen, die vorher, nachher oder parallel zu dem bestehenden Schritt eingegeben werden können. Versucht in Figur 7 der Benutzer einen Schritt vor dem Schließen der Werkzeugschließeinheit zu finden, so zeigt der Cursorpfeil 14 nach links. Auf dem Schirm 13 schlägt das Programm in der Leiste 15 verschiedene Auswahlmöglichkeiten vor, die an dieser Stelle in den bestehenden Zyklus 16 ergänzt werden können. Will der Benutzer an dieser Stelle einmal überprüfen, ob die Möglichkeit tatsächlich besteht, so kann er zur Gegenkontrolle den Cursor auf den nächsten Schritt nach links einstellen und den Cursorpfeil 14 nach rechts richten (Fig. 8), und das Programm schlägt ihm die gleichen Schritte wie in Figur 7 in der Leiste 15 vor.

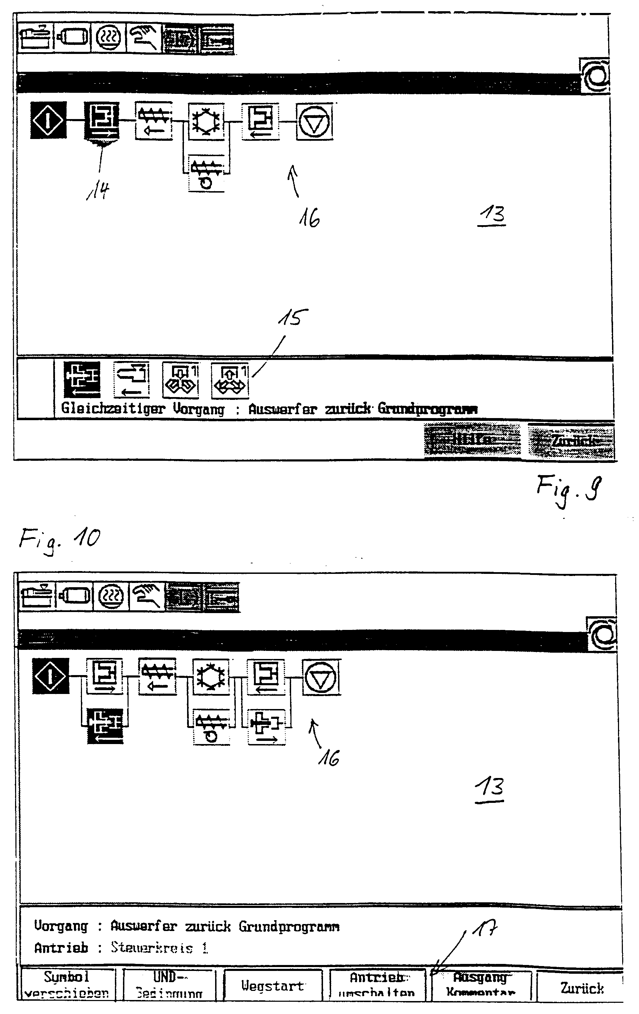

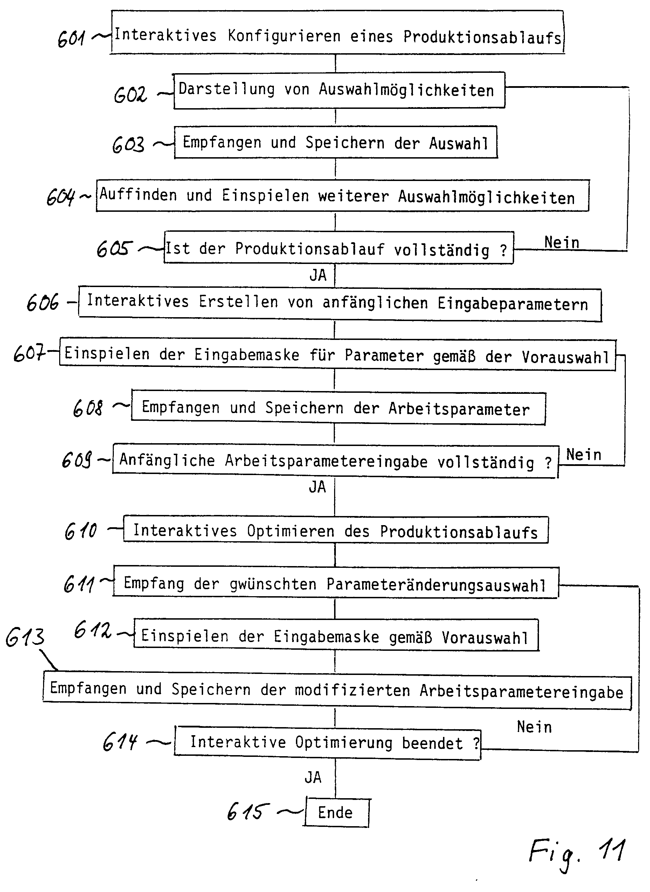

Die Möglichkeit besteht, weitere Schritte einzufügen oder zu ergänzen, sowohl vor als auch nach einem bestehenden Schritt und gemäß Figur 9 und 10 können auch parallele Schritte eingegeben werden. Der Benutzer kann nun in Zusammenspiel mit Bildschirm und Tastatur die entsprechende Möglichkeit auswählen. Für die Eingabe muß lediglich noch der "Enter"-Knopf gedrückt werden. Bei einem Vergleich der Figuren 9 und 10 ist auch festzustellen, daß der Cursorpfeil 14 nach unten gerichtet ist und das Programm in Leiste 15 weitere Schritte vorschlägt, die als parallele Schritte zu dem bereits bestehenden Schritt eingegeben werden können, wie z.B. der Schritt des Zurückziehens der Auswerfereinheit (schwarz unterlegt). Wenn der Benutzer jetzt den "Enter"-Knopf betätigt, wird das Programm den Schritt ergänzen, wie in Figur 10 dargestellt. Die weitere Linie 17 in Figur 10 zeigt, wie die Softkeys 17 von Figur 4 gelegt sind. Insofern dienen sowohl die Softkeys als auch die Tastatur als Werkzeug für die Eingabe des Spritzzyklus.

Zur Vervollständigung werden noch die Bedeutungen der Bildzeichen im Tastaturblock 12 der Eingabeeinheit E erläutert. Es bedeuten:
- A: Maschineneinstellungen, Maschinenkonfigurationen
- B: Programm verändern
- C: Automatischer Ablauf
- D: Eingänge/Ausgänge
- E: Alarmprogramm
- F: Handlingablauf
- G: Handlingprogramm verändern
- H: Werkzeug schließen
- I: Werkzeug öffnen
- J: Auswerfer
- K: Plastifiziereinheit vor-/zurückfahren
- L: Einspritzen
- M: Dosieren
- N: Handling fahren
- O: Werkzeugtemperierung
- P: Werkzeugteile ein-/ausfahren
- Q: Unterprogramme I
- R: Plastifiziereinheittemperierung
- S: Programmierbare Ein-/Ausgänge
- T: Unterprogramme II
- U: Handling Unterprogramme
- V: Datenein-/ausgabe
- W: Graphikanzeige am Bildschirm, Meßdatenerfassung
- X: Qualitätssicherung
- Y: Überwachungsfunktion
- Z: Optimierung
- ;: Protokoll
- +: Bildschirmausdruck
- i: Information, Übersicht
- ?: Direktsprung

## Patentansprüche

1. Verfahren zur Steuerung einer Kunststoff-Spritzgießmaschine, bei dem in einer den Bediener führenden Form die für den Ablauf eines Spritzzyklus erforderlichen Betriebsparameter über eine Eingabeeinheit (E) in eine diese Betriebsparameter speichernde Datenverarbeitungseinheit eingegeben werden und anschließend ein oder mehrere Spritzzyklen gemäß den gespeicherten Betriebsparametern durchgeführt werden,
dadurch gekennzeichnet, daß bei der im wesentlichen vor Spritzbeginn erfolgenden Eingabe von Teilen des Ablaufs und der Konfiguration des Spritzzyklus der physikalisch mögliche als auch der maschinenseitig und werkzeugseitig konstruktiv bedingt mögliche Produktionsablauf berücksichtigt wird, daß die an der jeweiligen Maschine vorhandenen oder ihr zugeordneten Einrichtungen erfaßt und berücksichtigt werden, und daß als Ergebnis dem Bediener eine selektierte Auswahl an Eingabemöglichkeiten von weiteren, in die bestehenden Teile auch seitens Maschine und Werkzeug kompatibel einfügbaren Teilen des Ablaufs zur Verfügung gestellt wird.

2. Verfahren zur Steuerung einer Kunststoff-Spritzgießmaschine zur Eingabe eines Spritzzyklus und zur Eingabe der Betriebsparameter dafür, wobei die Spritzgießmaschine ein Werkzeug, eine Datenverarbeitungseinheit, sowie einen Programmspeicher umfaßt, der Anweisungen und Eingabeparameter speichert,
sowie mit einer Eingabeeinheit und einem Datensichtgerät, wobei das Verfahren folgende Schritte für die interaktive Eingabe umfaßt:
(a) Einspielen eines Menüs für Auswahlmöglichkeiten innerhalb des Spritzzyklus auf dem Datensichtgerät,
(b) Erhalten einer Eingabe vom Benutzer über die Eingabeeinheit und Speichern der Eingabe in der Datenverarbeitungseinheit,
sowie für die interaktive Erstellung von Arbeitsparametern umfassend die Schritte:
(c) Einspielen von Eingabemasken für den Benutzer auf dem Datensichtgerät für die Arbeitsparameter,
(d) Empfang einer Eingabe vom Benutzer über die Eingabeeinheit und Speichern der Arbeitsparametereingaben in der Datenverarbeitungseinheit sowie
(e) Wiederholen der Schritte (c) und (d) bis zur Beendigung der Eingabe der Arbeitsparameter,
dadurch gekennzeichnet, daß zur Eingabe eines Produktionsablaufs einschließlich des Spritzzyklus die Spritzgießmaschine mit einem Datensatz für die Grundregeln des Spritzgießens versehen ist, die physikalisch mögliche und strukturell spezifische Produktionsabläufe und Parameter umfassen, die mit der jeweiligen Spritzgießmaschine, dem Werkzeug und den gegebenenfalls vorhandenen Peripheriegeräten in Einklang stehen und die von der Kontrolleinheit überwacht sind, wobei das Verfahren für die interaktive Konfiguration des Produktionsablaufs die weiteren Schritte umfaßt:
(f) Einspielen im Schritt (a) eines Menüs für Auswahlmöglichkeiten eines Produktionsablaufes für den Benutzer auf dem Datensichtgerät, basierend auf der im Datensatz angegebenen Wissensbasis,
(g) Erhalten einer Eingabe und Speichern einer Produktionsablaufsauswahl in der Datenverarbeitungseinheit in Schritt (b),
(h) Auffinden weiterer Auswahlmöglichkeiten für den Produktionsablauf aus der Wissensbasis in Einklang mit früheren gespeicherten Benutzereingaben,
(i) Einspielen weiterer Auswahlmöglichkeiten auf dem Datensichtgerät für den Benutzer, die im vorausgegangenen Schritt (h) ausfindig gemacht worden sind und
(j) Wiederholen der Schritte (g) bis (i), bis die interaktive Konfiguration des Produktionsablaufs beendet ist,
sowie für die interaktive Erstellung anfänglicher Arbeitsparameter für den Produktionsablauf umfassend die Schritte:
(k) Einspielen von Eingabemasken in Schritt (c) für den Benutzer auf dem Datensichtgerät, die mit dem ausgewählten Produktionsablauf verbunden sind und gegebenenfalls eines empfohlenen Bereichs für die Arbeitsparameter,
(l) Empfang einer Eingabe und Speichern der Arbeitsparametereingaben gemäß Schritt (d) sowie
(m) Wiederholen der Schritte (k) und (l) bis zur Beendigung der Eingabe der Arbeitsparameter für jeden Schritt des Produktionsablaufs.

3. Verfahren nach Anspruch 2, dadurch gekennzeichnet, daß im Anschluß an Schritt (m) der gespeicherte vollständige Produktionsablauf optimiert wird, durch die Schritte:
(n) Empfangen einer gewünschten Auswahl des Produktionsablaufs, dessen Arbeitsparameter der Benutzer zu ändern wünscht, über die Eingabeeinheit,
(o) Einspielen einer Eingabemaske über das Datensichtgerät für den Benutzer, die mit der gewünschten Auswahl in Verbindung steht und gegebenenfalls Vorschlag eines Bereichs angemessener Arbeitsparameter, die damit verbunden sind,
(p) Erhalt einer Eingabe über die Eingabeeinheit vom Benutzer und Speichern der geänderten Betriebsparameter in der Speichereinheit,
(q) Wiederholen der Schritte (n) bis (p), bis die interaktive Optimierung beendet ist.

4. Verfahren nach einem der Ansprüche 1 bis 3, dadurch gekennzeichnet, daß die Auswahl an Eingabemöglichkeiten zur Verfügung gestellt wird, nachdem auf einem Datensichtgerät der Spritzzyklus in Kenntnis der möglichen Spritzzyklen und der vorhandenen Einrichtungen frei konfiguriert ist.

5. Verfahren nach Anspruch 4, dadurch gekennzeichnet, daß die freie Konfiguration mittels symbolgeführter Auswahl einzelner Schritte eines Spritzzyklus und mittels Erstellung einer hierarchischen Ablauffolge stattfindet.

6. Verfahren nach Anspruch 4 oder 5, dadurch gekennzeichnet, daß die freie Konfiguration auf einer einzigen, im Datensichtgerät eingespielten Konfigurationsmaske (K,K') erfolgt.

7. Verfahren nach einem der vorhergehenden Ansprüche, dadurch gekennzeichnet, daß die Eingabe von Parametern nach Eingabe der Konfiguration nur in den Eingabemasken möglich ist, die für den konfigurierten Spritzzyklus erforderlich sind.

8. Verfahren nach einem der vorhergehenden Ansprüche, dadurch gekennzeichnet, daß vor der Eingabe von gleichzeitig oder nacheinander erfolgenden Schritten eine Plausibilitätsprüfung durchgeführt wird, die ggf. eine weitere Eingabe verhindert.

9. Verfahren nach einem der vorhergehenden Ansprüche, dadurch gekennzeichnet, daß nach Auswahl eines Schrittes, der in einem Spritzzyklus auftaucht, wenigstens die zur Beendigung des Spritzzyklus erforderlichen weiteren Schritte angegeben werden.

10. Verfahren nach einem der vorhergehenden Ansprüche, dadurch gekennzeichnet, daß das Einrichten der Spritzgießmaschine durch eine Überwachungsstruktur mit übergeordneter Baumstruktur zur Überwachung der Betriebsparameter durchgeführt wird.

11. Verfahren nach einem der vorhergehenden Ansprüche, dadurch gekennzeichnet, daß als Auswahl an Eingabemöglichkeiten gleichzeitig oder nacheinander erfolgende Bewegungsabläufe zur Verfügung gestellt werden, entsprechend der von der Maschine zur Verfügung gestellten Resourcen.

12. Verfahren nach einem der vorhergehenden Ansprüche, dadurch gekennzeichnet, daß die Eingabe einzelner Schritte des Spritzzyklus in nacheinander erfolgenden Bewegungsabläufen wiederholbar ist.

13. Verfahren nach einem der vorhergehenden Ansprüche, dadurch gekennzeichnet, daß eine direkte Einbindung hinsichtlich der Ablaufsteuerung von beliebigen Peripheriegeräten erfolgt, die zur Produktionszelle "Spritzeinheit" zusammengefügt sind wie z.B. Handling, Temperiergeräte, Sortier- und Stapeleinrichtung.

14. Verfahren nach einem der vorhergehenden Ansprüche, dadurch gekennzeichnet, daß ein die Spritzzyklen umfassender Produktionsablauf auf dem Datensichtgerät frei konfigurierbar ist, der Verlaufsphasen und Abschlußphasen beinhaltet.

## Claims

1. Method of controlling a plastics injection moulding machine in which, in a form which guides the user, the operational parameters necessary for executing an injection cycle are entered via an input unit (E) into a data-processing unit which stores these parameters, one or a plurality of injection cycles then being carried out in accordance with the stored operational parameters,
characterised in that, during the entry, effected substantially before the start of injection, of portions of the sequence and of the configuration of the injection cycle, the production sequence which is physically possible, and possible in terms of the constraints of machine, tool and construction are taken into account, in that the apparatus present on the relevant machine or associated with it are detected and taken into account, and in that as a result there is made available to the user a selection of possible inputs of further portions of the sequence, which may be inserted into the existing portions, and which are also compatible in terms of machine and tool.

2. Method of controlling a plastics injection moulding machine for input of an injection cycle, and for entering the operational parameters therefor, the injection moulding machine including a tool, a data-processing unit and a program memory which stores instructions and input parameters,
and with an input unit and a display unit, the method including the following steps for interactive input:
a) Display on the display unit of a menu for possible selections within the injection cycle;
b) Receipt of an input from the user via the input unit, and storage of the input in the data-processing unit;
and for interactively setting up operational parameters, including the steps:
c) Display of input windows for the user on the display unit for the operational parameters;
d) Receipt of an input from the user via the input unit, and storage of the operational parameters in the data-processing unit, and
e) Repetition of steps c) and d) until completion of entry of the operational parameters,
characterised in that, for input of a production sequence inclusive of the injection cycle, the injection moulding machine is provided with a data set of the basic rules of injection moulding, including physically possible and structurally-specific production sequences and parameters, which harmonise with the relevant injection moulding machine, the tool and any peripheral apparatus present, and which are monitored by the monitoring unit, the method for interactive configuration of the production sequence including the further steps:
f) Display in step (a) of a menu for possible selections of a production sequence for the user on the display unit, based on the knowledge base contained in the data set;
g) Receipt of an input and storage of a production-sequence selection in the data-processing unit in step (b);
h) finding further possible selections for the production sequence from the knowledge base, in harmony with user inputs previously stored;
i) Display of further possible selections for the user on the display unit, which were made available in the preceding step (h), and
j) Repetition of steps (g) to (i) until interactive configuration of the production sequence is complete,
and, for interactive setting up of initial operational parameters for the production sequence, including the steps:
k) Display, in step (c) for the user on the display unit of input windows which are connected with the selected production sequence, and if necessary of a recommended area for the operational parameters;
l) Receipt of an entry and storage of the operational input entries according to step (d), and
m) Repetition of steps (k) and (l) until input of the operational parameters for each step of the production sequence is complete.

3. Method according to claim 2, characterised in that, in connection with step (m) the stored entire production sequence is optimised, by the following steps:
n) Receipt of a desired selection of the production sequence, the operational parameters of which the user wishes to alter, via the input unit;
o) Display for the user, via the display unit, of an input window which is in connection with the desired selection and if necessary proposal of a range of appropriate operational parameters which are in connection therewith;
p) Receipt from the user of an entry via the input unit, and storage of the altered operational parameters in the storage unit;
q) Repetition of steps (n) to (p) until the interactive optimisation is complete.

4. Method according to one of claims 1 to 3, characterised in that the selection of possible entries is made available after the injection cycle has been freely configured on a display unit, with knowledge of the possible injection cycles and of the devices present.

5. Method according to claim 4, characterised in that the free configuration takes place by means of a symbol-guided selection of individual steps of an injection cycle, and by means of setting up a hierarchical succession of sequences.

6. Method according to claim 4 or 5, characterised in that the free configuration is effected on a single configuration window (K, K') displayed in the display unit.

7. Method according to one of the preceding claims, characterised in that entry of parameters after entry of the configuration is only possible in the input windows which are necessary for the configured injection cycle.

8. Method according to one of the preceding claims, characterised in that, before entry of simultaneous or successive steps, a plausibility check is carried out, which if necessary prevents a further entry.

9. Method according to one of the preceding claims, characterised in that, after selection of a step which appears in an injection cycle, at least the further steps necessary for termination of the injection cycle are indicated.

10. Method according to one of the preceding claims, characterised in that installation of the injection moulding machine is carried out by a monitoring structure with a higher-order tree structure for monitoring the operational parameters.

11. Method according to one of the preceding claims, characterised in that, as a selection of possible entries, simultaneously- or successively-executed movement sequences are made available, in accordance with the resources made available by the machine.

12. Method according to one of the preceding claims, characterised in that the entry of individual steps of the injection cycle may be repeated in successive movement sequences.

13. Method according to one of the preceding claims, characterised in that a direct incorporation, in terms of procedure control, is effected of any peripheral apparatus which are combined into the production cell "injection unit", such for example as handling, tempering apparatus, sorting and stacking device.

14. Method according to one of the preceding claims, characterised in that a production sequence comprising the injection cycles and containing method phases and terminal phases, is freely configurable on the display unit.

## Revendications

1. Procédé de pilotage d'une presse d'injection de matière synthétique, par lequel les paramètres de fonctionnement nécessaires au déroulement d'un cycle d'injection sont rentrés suivant un masque guidant l'opérateur au moyen d'une unité d'entrée (E) dans une unité de traitement de données mémorisant ces paramètres de fonctionnement,
et par lequel un ou plusieurs cycle d'injection sont pilotés en fonction des paramètres de fonctionnement mémorisés,
caractérisée en ce que
- les entrées de parties de déroulement et de la configuration du cycle d'injection effectuées principalement avant le début de l'injection tiennent compte de possibilités de déroulement de production physiquement réalisables et également constructivement compatibles avec la machine et le moule,
- les équipements disponibles ou raccordés à chacune des machines sont inclus et pris en compte,
- et en ce qu'il est proposé, suite à un action de l'opérateur, un choix sélectif de possibilités d'entrées de parties de déroulement supplémentaires insérables en compatibilité des parties préexistantes et également en fonction de la machine et du moule.

2. Procédé de pilotage d'une presse d'injection de matière synthétique, d'entrée de données d'un cycle d'injection et d'entrée de paramètres de fonctionnement,
- dans lequel la presse d'injection comprend un moule, une unité de traitement de données avec une mémoire de programme mémorisant des connaissances et des paramètres, ainsi qu'une unité d'entrée et un appareil de présentation de donnée,
- dans lequel le procédé comprend les étapes suivantes pour une entrée interactive :
(a) apparition sur l'appareil de présentation de données d'un menu relatif aux possibilités de choix à l'intérieur d'un cycle d'injection,
(b) réception d'une entrée de l'opérateur sur l'unité d'entrée et mise en mémoire de l'entrée dans l'unité de traitement de données,
- ainsi que les étapes suivantes pour l'établissement interactif de paramètres de fonctionnement :
(c) apparition sur l'appareil de présentation de données à l'intention de l'opérateur de masques de saisies des paramètres de fonctionnement,
(d) réception d'une entrée de l'opérateur sur l'unité d'entrée et mise en mémoire des données de paramètres de fonctionnement dans l'unité de traitement de données, ainsi que,
(e) répétition des étapes (c) et (d) jusqu'à achèvement de l'introduction des paramètres de fonctionnement,
caractérisé en ce que
la presse d'injection comprend une banque de données des règles de base de l'injection pour l'entrée d'un déroulement de production incluant un cycle d'injection, banque qui englobe les paramètres et les déroulements de production structurellement spécifiés et physiquement possibles, qui s'accorde avec chacune des presses d'injection particulières, moules et périphéries possibles, et qui est supervisée par une unité de contrôle,
- en ce que le procédé de configuration interactive d'un déroulement de production comprend les étapes suivantes :
(f) apparition sur l'appareil de présentation de données en l'étape (a) d'un menu à l'attention de l'opérateur relatif aux possibilités de choix à l'intérieur d'un cycle d'injection basé sur la base de connaissance intégrée dans la base de données,
(g) réception d'une entrée et mise en mémoire de la sélection de déroulement de production dans l'unité de traitement de données en l'étape (b),
(h) recherche d'autres possibilités de choix de déroulement de production dans la base de connaissances en correspondance avec les entrées précédentes et mémorisées de l'opérateur,
(i) apparition des autres possibilités de choix relevées lors de l'étape précédente (h) sur l'appareil de présentation de données à l'attention de l'opérateur, et
(j) répétition des étapes (g) à (i) jusqu'à ce qu'une configuration interactive du déroulement de la production soit achevée,
- ainsi que, pour l'établissement interactif des paramètres de fonctionnement de départ pour le déroulement de la production, les étapes suivantes :
(k) apparition en l'étape (c) sur l'appareil de présentation de données à l'intention de l'opérateur de masques de saisies qui sont en relation avec les déroulements de production sélectionnés et, le cas échéant, une gamme recommandée pour les paramètres de fonctionnement,
(l) réception d'une entrée et mise en mémoire des paramètres de fonctionnement selon l'étape (d), ainsi que,
(m) répétition des étapes (k) et (l) jusqu'à achèvement de l'entrée de paramètres de fonctionnement pour chacune des étapes du déroulement de la production.

3. Procédé selon la revendication 2, caractérisé en ce que, en raccordement à l'étape (m), l'ensemble du déroulement de la production mémorisé est optimisé par les étapes suivantes :
(n) réception sur l'unité d'entrée de la sélection désirée du déroulement de la production dont l'opérateur souhaite modifier les paramètres de fonctionnement,
(o) apparition sur l'appareil de présentation de données à l'intention de l'opérateur d'un masques de saisies qui est en relation avec le choix désiré, et qui présente, le cas échéant, une proposition correspondante de gamme du paramètre de fonctionnement,
(p) réception d'une entrée de l'opérateur sur l'unité d'entrée, et mémorisation du paramètre modifié dans l'unité de mémorisation,
(q) répétition des étapes (n) à (p) jusqu'à ce que l'optimisation interactive soit achevée.

4. Procédé selon l'une des revendication 1 à 3, caractérisé en ce que le choix de possibilités d'entrées est proposé une fois que le cycle d'injection est librement configuré sur un appareil de présentation de données en connaissance des cycles possibles et des dispositifs existants.

5. Procédé selon la revendication 4, caractérisé en ce que la libre configuration est effectué par un choix guidé par des symboles d'étapes individuelles d'un cycle d'injection, et au moyen de l'établissement d'une séquence de déroulement hiérarchisée.

6. Procédé selon la revendication 4 ou 5, caractérisé en ce que la libre configuration s'effectue sur un seul masque de configuration (K,K') apparaissant sur une appareil de présentation de données.

7. Procédé selon l'une des revendications précédentes, caractérisé en ce que l'introduction de paramètres après l'introduction de la configuration n'est possible que par le masque de saisie qui est utilisé pour la configuration du cycle d'injection.

8. Procédé selon l'une des revendications précédentes, caractérisé en ce qu'un test de plausibilité est effectué avant l'introduction d'étapes simultanées ou successives, ce test empêchant le cas échéant une étape supplémentaire.

9. Procédé selon l'une des revendications précédentes, caractérisé en ce que, après sélection de l'une des étapes présentes dans le cycle de production, il est au moins proposé les étapes supplémentaires nécessaires à achèvement du cycle d'injection.

10. Procédé selon l'une des revendications précédentes, caractérisé en ce que la mise en oeuvre de la presse d'injection est effectuée au travers d'une structure de surveillance comprenant une structure arborescente supérieure de contrôle des paramètres de fonctionnement.

11. Procédé selon l'une des revendications précédentes, caractérisé en ce que des séquences de déroulements de mouvements simultanés ou successifs, correspondant au ressources disponibles de la machine, sont disponibles en tant que choix de possibilité d'entrées,

12. Procédé selon l'une des revendications précédentes, caractérisé en ce que l'entrée d'une étape individuel du cycle d'injection peut être répétée lors de déroulement de mouvements successifs.

13. Procédé selon l'une des revendications précédentes, caractérisé en ce que une liaison directe est effectuée en ce qui concerne le pilotage du fonctionnement d'éventuels appareils périphériques qui sont réunis dans la zone de production "unité d'injection", tel que , par exemple, manipulateur, appareil de régulation de température, dispositif de tri ou de rangement.

14. Procédé selon l'une des revendications précédentes, caractérisé en ce que le déroulement d'une production incluant un cycle d'injection, ainsi qu'une phase de démarrage et d'arrêt, est librement configurable sur une appareil de présentation de données.
